# EUROPEAN PATENT APPLICATION

(11) **EP 4 203 247 A1**
(43) Date of publication of application: **28.06.2023**
(21) Application number: 21860229.0
(22) Date of filing: 18.08.2021
(51) Int. Cl.: H02K 1/17, H02K 1/26, H02K 13/00

(54) **PERMANENT MAGNET ROTATING ARMATURE TYPE MOTOR FOR MECHANICALLY ADJUSTING MAGNETIC FIELD**

(30) Priority: 24.08.2020 CN 202010855455
(71) Applicant: Tsinghua University, Beijing 100084 (CN)
(72) Inventor: WANG, Shanming, Beijing 100084 (CN)
(74) Representative: Isarpatent
(86) International application number: PCT/CN2021/113202
(87) International publication number: WO 2022/042391

(57) **Abstract**

Disclosed is permanent magnet rotating armature motor which adjusts a magnetic field in a mechanical manner, in which a stator core is arranged within a stator mount and is a part of magnetic circuit of the motor, and stator permanent magnet poles are arranged within the stator core; in middle of the stator permanent magnet poles, a rotor core is fixedly arranged on a rotor shaft, and the rotor shaft drives the rotor core to rotate around a shaft axis and is fixedly arranged inside the stator mount through a bearing; a number of rotor slots are evenly formed on an outer circumference of the rotor core, and rotor armature windings are arranged in the rotor slots; on one or both sides of the rotor core, a commutator or slip ring is provided on the rotor shaft, and the rotor armature windings are coupled to an external static power supply circuit through the commutator or slip ring and brushes; and a mechanical manner is used for magnetic field adjustment. The present disclosure can be used to improve the efficiency of the motor, reduce the volume and weight of the motor, and overcome the difficulty that a magnetic field of a permanent magnet motor is incapable to be adjusted.

## Description

### FIELD OF THE INVENTION

The present disclosure relates to a permanent magnet rotating armature motor, in particular to a permanent magnet rotating armature motor which adjusts a magnetic field in a mechanical manner.

### BACKGROUND OF THE INVENTION

Marine electric propulsion has become a major trend in power development of modern ships and warships, a core of which lies in employing propulsion motors as the powerplant to drive ships and warships. This system has many outstanding advantages, such as low vibration and noise, convenient to be controlled, good speed governing performance, and flexible layout, high reliability, good maintainability, strong vitality, etc. Electric propulsion technology has become a major development aspect in navies of many countries, such as the United States, the United Kingdom, Germany, France, the Russian, and also a key product of major propulsion equipment suppliers, such as Siemens, ABB and other propulsion equipment suppliers.

Types of marine propulsion motors include DC motors, asynchronous motors and permanent magnet motors. Different motors have their own advantages and shortcomings. At present, the asynchronous motors and the permanent magnet motors have a tendency of replacing the DC motors, but some advantages of the DC motors is still impossible to be replaced. Although the asynchronous motors and the permanent magnet motors suffer from no frictional contact due to commutators, their speed governing systems require power electronic devices, which bring a series of problems: 1. a power electronic device undoubtedly increases the volume and weight of a propulsion motor system; 2. the power electronic device results in loss which reduces the efficiency of the system; 3. there are many power electronic components involved so that a high failure rate may be resulted, which degrades the reliability of the system. On the contrary, although a commutator of a DC motor increases maintenance workload relatively, it is not unacceptable. Rather, the DC motor has a relatively simple control system, and its rotating speed adjustment performance is excellent. What is the most important for warships is that there are seldom frequency spectrum components in a vibration signal of the DC motor and there is no low-frequency vibration signal having a pole-frequency, which is incomparable by either the asynchronous motors or the permanent magnet motors and is of great significance to stealth of warships.

Because of these above, Siemens' propulsion motor products are divided into two categories, i.e., one is DC propulsion motors and the other is permanent magnet motors, and the DC propulsion motors are still a major aspect of products. However, the existing DC propulsion motors still have some shortcomings. A DC propulsion motor employs an electrically excited manner, in which a magnetic field is needed to be generated by electrifying windings. The loss of the windings greatly reduces the efficiency of the motor, and a large space is needed to accommodate the windings. The existence of windings and magnetic poles have greatly increases a diameter of the motor as well as the volume and weight, and further decreases a torque density, which are extremely unfavorable for marine applications; and the loss of the windings reduces the efficiency of the motor so that a cruising range of a ship has been reduced.

### SUMMARY OF THE INVENTION

In view of the above problems, the objective of the present disclosure is to provide a permanent magnet rotating armature motor that adjusts a magnetic field in a mechanical manner, which can improve the efficiency of the motor, reduce the volume and weight of the motor, and overcome the difficulty that a magnetic field of a permanent magnet motor is incapable to be adjusted.

In order to achieve the above objectives, the present disclosure adopts the following technical solutions. In one embodiment, a permanent magnet rotating armature motor which adjusts a magnetic field in a mechanical manner comprises a stator mount, a stator core, stator permanent magnet poles, a rotor core, and rotor slots; the stator core is arranged within the stator mount and is a part of magnetic circuit of the motor, and the stator permanent magnet poles are arranged within the stator core; in middle of the stator permanent magnet poles, the rotor core is fixedly arranged on a rotor shaft, and the rotor shaft drives the rotor core to rotate around a shaft axis and is fixedly arranged inside the stator mount through a bearing; a number of rotor slots are evenly formed on an outer circumference of the rotor core, and rotor armature windings are arranged in the rotor slots; on one or both sides of the rotor core, a commutator or slip ring is provided on the rotor shaft, and the rotor armature windings are coupled to an external static power supply circuit through the commutator or slip ring and brushes; and a mechanical manner is used for magnetic field adjustment.

Further, the stator permanent magnet poles are movably arranged inside the stator core, and the stator permanent magnet poles are movable along an axial direction.

Further, the stator permanent magnet poles are each divided into segments in the axial direction to move toward both ends of an axis of the motor, respectively, so as to reduce a length protruding out of each end and thus reduce a space required in the axial direction of the motor.

Further, the stator permanent magnet poles are arranged, separately, to be divided into segments in the axial direction, and the stator permanent magnet poles are movably arranged within the stator core; alternatively, the stator core together with the stator permanent magnet poles are divided into segments in the axial direction, and the stator permanent magnet poles are fixedly arranged inside the stator core; some segments of the stator permanent magnet poles or of an ensemble of the stator core and the stator permanent magnet poles rotate in a circumferential direction relative to other segments, so that the stator permanent magnet poles on respective segments are staggered from each other.

Further, a small section of the stator core is configured to be as a movable core section that is independently movable in the axial direction, the movable core section is disconnected with the stator core, and an air gap therebetween is small; and the movable core section moves in the axial direction.

Further, the movable core sections each adopt a segmented form to move toward both ends of the axial direction of the motor, respectively, so as to reduce a length protruding out of each end.

Further, the stator core is provided with a magnetic adjustment section thereon, the magnetic adjustment section is provided inside with a rotatable magnetic permeable section which can rotate around a center of its own; by adjusting a position of a length direction of the rotatable magnetic permeable section relative to a magnetic field direction in the stator core, magnetic reluctance of magnetic circuit is able to be adjusted in a continuous manner so as to adjust a strength of the magnetic field.

In another implementation, a permanent magnet rotating armature motor which adjusts a magnetic field in a mechanical manner is characterized by comprising a stator mount, a stator core, stator core magnetic poles, a rotor core, rotor slots, and stator tangential magnetic poles; the stator core is arranged within the stator mount and is a part of magnetic circuit of the motor, the stator tangential magnetic poles are arranged on the stator core, and the stator core magnetic poles are arranged inside the stator core; in middle of the stator core magnetic poles, the rotor core is fixedly arranged on a rotor shaft, the rotor shaft drives the rotor core to rotate around a shaft axis and is fixedly arranged in the stator mount via a bearing; a number of slots are evenly formed on an outer circumference of the rotor core, and rotor armature windings are arranged in the slots; on one or both sides of the rotor core, a commutator or slip ring is arranged on the rotor shaft, and the rotor armature windings are coupled to an external static power supply circuit through the commutator or slip ring and brushes.

Further, the stator tangential magnetic poles are movably arranged on the stator core, and the stator tangential magnetic poles are movable along the axial direction.

Further, the stator tangential magnetic poles are each divided into segments in the axial direction to move toward both ends of the axis of the motor, respectively, so as to reduce a length protruding out of each end.

Further, the stator tangential magnetic poles are arranged, separately, to be divided into segments in the axial direction, or alternatively the stator core, the stator core magnetic poles and the stator tangential magnetic poles are together arranged to be divided into segments in the axial direction. Some segments of the stator tangential magnetic poles or of an ensemble of the stator core, the stator core magnetic poles and the stator tangential magnetic poles are rotatable in the circumferential direction relative to other segments, so that the stator core magnetic poles on respective segments are staggered from each other.

Further, the stator core magnetic poles are movably arranged within the stator core and are movable along the axial direction.

Further, the stator core magnetic poles are each arranged to be divided into segments in the axial direction to move toward both ends of the axis of the motor, respectively, so as to reduce a length protruding out of each end.

Further, a stator tangential magnetic pole and two sector cores together form a cylinder which is rotatable around its axis; by adjusting a position relationship between a magnetic field direction of the stator tangential magnetic pole and a circumferential direction of the stator core, magnetic reluctance of magnetic circuit is able to be adjusted in a continuous manner so as to adjust a strength of the magnetic field.

Further, the stator core is provided with a magnetic adjustment section thereon, and the magnetic adjustment section is provided inside with a rotatable magnetic permeable section which is rotatable around a center of its own; by adjusting a position relationship between a length direction of the rotatable magnetic permeable section and the stator core, magnetic reluctance of magnetic circuit is able to be adjusted in a continuous manner so as to adjust a strength of the magnetic field.

Further, some small sections of the stator core are configured to be as movable core sections which are independently movable in the axial direction, the movable core sections are disconnected with the stator core, and air gaps therebetween are small; and the movable core sections are movable in the axial direction.

Further, the movable core sections are each arranged to be divided into segments in the axial direction to move toward both ends of the axis of the motor, respectively, so as to reduce a length protruding out of each end.

Further, a magnetic flux short-circuiting movable core section is provided beside the stator core and the stator tangential magnetic pole, and the magnetic flux short-circuiting movable core section is rotatable in a circumferential direction by using a rotor axis as a center, or is movable in the axial direction; when rotating, the magnetic flux short-circuiting movable core section rotates by different angles to adjust the magnetic field; when moving in the axial direction, the magnetic flux short-circuiting movable core section moves in the axial direction to a position that is not aligned with the rotor core.

Further, the stator permanent magnet poles are fixedly arranged within the stator core in a surface mount manner, the stator core magnetic poles are fixedly arranged on inner surface of the stator permanent magnetic poles, respectively, a bypass yoke is arranged beside the stator permanent magnetic pole and the stator core magnetic pole, and the bypass yoke is movable in the axial direction or in the circumferential direction.

Using the above technical solutions, the present disclosure has the following advantages: a mechanical manner is adopted in the present disclosure to adjust an essentially unadjustable magnetic field of a permanent magnet motor, which can effectively improve the efficiency of the motor, reduce the volume and weight of the motor, and overcome the difficulty that the magnetic field of the permanent magnet motor is incapable to be adjusted.

Based on the above advantages, the present disclosure can be applied on permanent magnet DC motors, permanent magnet rotating armature motors, and all motors with a permanent magnet arranged on the stator.

### BRIEF DESCRIPTION OF THE DRAWINGS

Fig. 1 is a schematic cross section view of an existing electrically excited DC motor or rotating armature motor.
Fig. 2 is a schematic diagram of a permanent magnet rotating armature motor which adjusts a magnetic field in a mechanical manner according to the present disclosure.
Fig. 3 is a schematic diagram of another embodiment of the permanent magnet rotating armature motor which adjusts a magnetic field in a mechanical manner according to the present disclosure.
Fig. 4 is a schematic diagram of another embodiment of the permanent magnet rotating armature motor which adjusts a magnetic field in a mechanical manner according to the present disclosure.
Fig. 5 is a schematic diagram of another embodiment of the permanent magnet rotating armature motor which adjusts a magnetic field in a mechanical manner according to the present disclosure.
Fig. 6 is a schematic diagram of another embodiment of the permanent magnet rotating armature motor which adjusts a magnetic field in a mechanical manner according to the present disclosure.
Fig. 7 is a schematic diagram of another embodiment of the permanent magnet rotating armature motor which adjusts a magnetic field in a mechanical manner according to the present disclosure.
Fig. 8 is a schematic diagram of another embodiment of the permanent magnet rotating armature motor which adjusts a magnetic field in a mechanical manner according to the present disclosure.
Fig. 9 is a schematic diagram of another embodiment of the permanent magnet rotating armature motor which adjusts a magnetic field in a mechanical manner according to the present disclosure.
Fig. 10 is a schematic diagram of another embodiment of the permanent magnet rotating armature motor which adjusts a magnetic field in a mechanical manner according to the present disclosure.
Fig. 11 is a schematic diagram of another embodiment of the permanent magnet rotating armature motor which adjusts a magnetic field in a mechanical manner according to the present disclosure.
Fig. 12 is a schematic diagram of another embodiment of the permanent magnet rotating armature motor which adjusts a magnetic field in a mechanical manner according to the present disclosure.

### DETAILED DESCRIPTION OF THE EMBODIMENTS

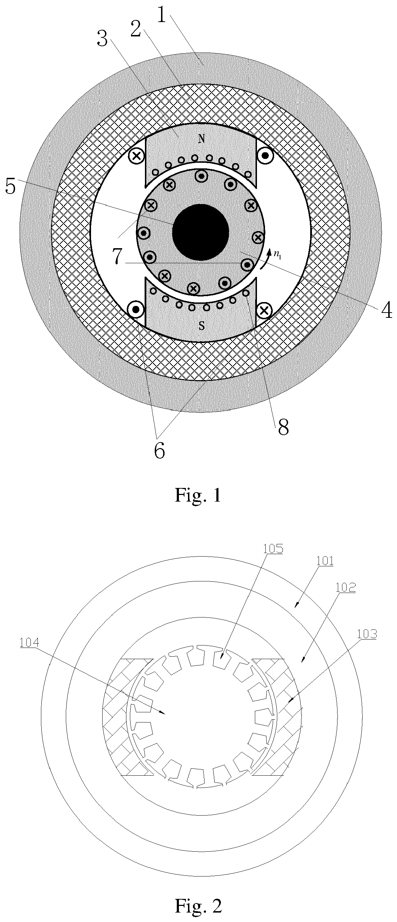

An existing electrically excited DC motor is shown in Fig. 1. The DC motor includes a stator mount 1, a stator core 2, stator magnetic poles 3, a rotor core 4, a rotor shaft 5, excitation windings 6, rotor armature windings 7, and compensation windings 8. In this case, the stator mount 1 can be fixed in a manner of a conventional motor, the stator core 2 is fixedly arranged within the stator mount 1, the stator core 2 is a part of magnetic circuit of the motor, and the stator magnetic poles 3 are fixedly arranged within the stator core 2, and the excitation windings 6 surround the stator magnetic poles 3. The excitation windings 6 are electrified to generate magnetic poles of N and S on the stator magnetic poles 3, respectively. In the middle of the N and S poles on the stator magnetic poles 3, the rotor core 4 is fixedly arranged on the rotor shaft 5, and the rotor shaft 5 can drive the rotor core 4 to rotate around a shaft axis and is fixedly arranged within the stator base 1 via a bearing. A number of slots (not shown in the figure) are evenly formed on an outer circumference of the rotor core 4, and the rotor armature windings 7 are arranged in the slots. On one or both sides of the rotor core 4, a commutator (not shown in the figure) is provided on the rotor shaft 5; respective windings of the rotor armature windings 7 are coupled to an external static power supply circuit through the commutator and brushes (not shown in the figure). The compensation windings 8 are configured to compensate an armature reaction magnetic field to improve commutation.

As the excitation windings 6 have to be electrified to generate a magnetic field, there is bound to be loss, which reduces the efficiency of the motor; secondly, the excitation windings 6 and the stator magnetic poles 3 are bulky, which increases an outer diameter of the motor as well as the volume and weight of the motor.

In view of these two problems, the present disclosure provides a permanent magnet rotating armature motor that adjusts a magnetic field in a mechanical manner. In order to make the objectives, technical solutions, and advantages of the embodiments of the present disclosure more definite, the technical solutions of the embodiments of the present disclosure will be described clearly and completely in conjunction with the accompanying drawings of the embodiments of the present disclosure. Apparently, the described embodiments are part of the embodiments of the present disclosure, rather than all of them. Based on the described embodiments of the present disclosure, all other embodiments obtained by a person of ordinary skill in the art should fall within the protection scope of the present disclosure.

The present disclosure adopts a rotating armature motor excited by permanent magnets, as shown in Fig. 2, which includes a DC motor and a rotating armature AC motor. The rotating armature motor excited by permanent magnets includes a stator mount 101, a stator core 102, stator permanent magnet poles 103, a rotor core 104, and rotor slots 105. In this case, the stator mount 101 can be fixed in a manner of a conventional motor. The stator core 102 is arranged within the stator mount 101, and the stator core 102 is a part of magnetic circuit of the motor. The stator permanent magnet poles 103 are arranged within the stator core 102. In the middle of the stator permanent magnet poles 103, the rotor core 104 is fixedly arranged on a rotor shaft, and the rotor shaft can drive the rotor core 104 to rotate around a shaft axis and is fixedly arranged inside the stator mount 101 through a bearing. A number of rotor slots 105 are evenly formed on an outer circumference of the rotor core 104, and rotor armature windings are arranged in the rotor slots 105. On one or both sides of the rotor core 104, a commutator or slip ring (not shown in the figure) is provided on the rotor shaft, and the rotor armature windings are coupled to an external static power supply circuit through the commutator or slip ring and brushes (not shown in the figure). A mechanical manner is used in the present disclosure for magnetic field adjustment.

For easy description, the description in some cases is set forth in a way of representing the rotating armature motor by the DC motor, and there is no impact resulted on the fact that the rotating armature motor of the present disclosure includes both the DC motor and the rotating armature AC motor. One way for the DC motor performing speed governing by adjusting a magnetic field lies in adjusting the magnetic field by regulating an excitation current so as to achieve the purpose of speed governing; and the rotating armature AC motor can adjust the motor magnetic field through the excitation current. However, a magnetic field of a permanent magnet is fixed, and a magnetic field of the permanent magnet DC motor cannot be adjusted, so that it is impossible to perform speed governing by adjusting the magnetic field; and a magnetic field of the rotating armature AC motor cannot be adjust, neither. In view of the difficulty that the permanent magnet excited field cannot be adjusted, the present disclosure adopts a mechanical manner to enable adjustment of the magnetic field.

In a first embodiment of the present disclosure, a permanent magnet rotating armature motor is provided, as shown in Fig. 2. The stator permanent magnet poles 103 are movably arranged inside the stator core 102, and the stator permanent magnet poles 103 can move along an axial direction. In a normal operation state, the stator permanent magnet poles 103 are aligned with the rotor core 104 in the axial direction. In the case that adjustment of the magnetic field is required, a mechanical mechanism is employed to move the stator permanent magnet poles 103 axially so that the stator permanent magnet poles 103 are no longer aligned with the rotor core 104 in the axial direction. As a result, magnetic flux in the rotor core 104 decreases. That is, the effect of magnetic field weakening is realized, which enables a function of speed governing or voltage regulation.

Preferably, the stator permanent magnet poles 103 in a segmented form are also applicable. The stator permanent magnet poles 103 each can be divided into segments in the axial direction. Axial movement thereof can be moved toward both ends of an axis of the motor, respectively, to reduce a length protruding out of each end and thus reduce a space required in the axial direction of the motor.

In a second embodiment of the present disclosure, a permanent magnet rotating armature motor which adjusts a magnetic field in a mechanical manner that is provided adopts a pattern in which the stator permanent magnet poles 103 are arranged, separately, to be divided into segments in an axial direction, at this time, the stator permanent magnet poles 103 are movably arranged within the stator core 102; alternatively, another pattern is adopted in which the stator core 102 together with the stator permanent magnet poles 103 are divided into segments in the axial direction, at this time, the stator permanent magnet poles 103 are fixedly arranged inside the stator core 102. The number of segments can be set as desire. Some segments of the stator permanent magnet poles 103 or of an ensemble of the stator core 102 and the stator permanent magnet poles 103 can rotate in a circumferential direction relative to other segments, so that the stator permanent magnet poles 103 on respective segments are staggered by a certain angle. As such, magnetic flux resulted from interlinked armature windings is reduced to decrease an induced electromotive potential so that the effect of speed governing or voltage regulation through magnetic field weakening is achieved.

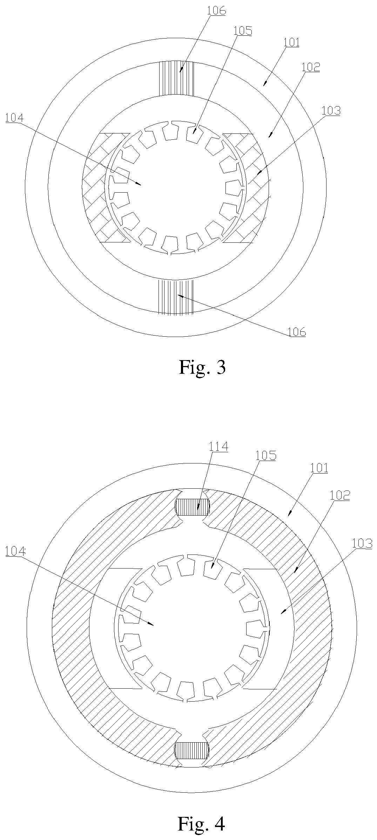

In a third embodiment of the present disclosure, a permanent magnet rotating armature motor which adjusts a magnetic field in a mechanical manner is provided, as shown in Fig. 3. In the present embodiment, a patter is adopted in which a small section of the stator core 102 is configured to be as a movable core section 106 that is independently movable in the axial direction. The movable core section 106 is disconnected with the stator core 102, and an air gap therebetween is as small as possible to reduce magnetic reluctance. In the case that weakening of a magnetic field is required, the movable core section 106 can be moved axially so that it is no longer aligned with the rotor core 104. Therefore, magnetic flux in the rotor core 104 will be reduced, that is, the effect of magnetic field weakening is realized, which enables a function of speed governing or voltage regulation.

Preferably, the movable core sections 106 each can further adopt a segmented form, in which axial movement thereof can move toward both ends of the axis of the motor, respectively, to reduce a length protruding out of each end and thus reduce a space required in the axial direction of the motor.

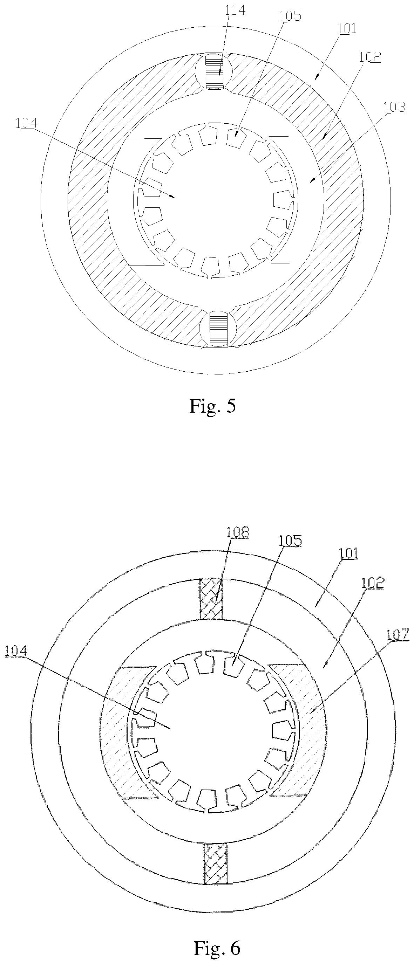

In a fourth embodiment of the present disclosure, a permanent magnet rotating armature motor which adjusts a magnetic field in a mechanical manner is provided, as shown in Figs. 4 and 5. In this embodiment, the stator core 102 is provided with a magnetic adjustment section thereon on. The magnetic adjustment section is provided inside with a rotatable magnetic permeable section 114, which can rotate around a center of its own. In Fig. 4, a length direction of the rotatable magnetic permeable section 114 is positioned to be consistent with a direction of a magnetic field within the stator core 102. At this time, while passing through the rotatable magnetic permeable section 114, a permanent magnetic field has low magnetic reluctance but strong magnetic field. In Fig. 5, the length direction of the rotatable magnetic permeable section 114 is positioned to be perpendicular to the direction of the magnetic field within the stator core 102. At this time, the permanent magnetic field hardly passes through the rotatable magnetic permeable section 114, and the magnetic reluctance is high and the magnetic field is weak. By adjusting the rotatable magnetic permeable section 114 to varied positions between the positions of Fig. 4 and Fig. 5, it is possible to adjust the magnetic reluctance of the magnetic circuit in a continuous manner, and thereby adjust the strength of the magnetic field.

In the above embodiment, a fracture surface of the stator core 102 at the magnetic adjustment section is an arc-shaped surface.

In a fifth embodiment of the present disclosure, a permanent magnet rotating armature motor which adjusts a magnetic field in a mechanical manner is provided, as shown in Fig. 6. In this embodiment, permanent magnets are arranged in a tangential arrangement, the permanent magnets are arranged on magnetic yokes, and during surface mount permanent magnet poles are changed at their positions with iron-core magnetic poles. The permanent magnet excited rotating armature motor includes a stator mount 101, a stator core 102, stator core magnetic poles 107, a rotor core 104, rotor slots 105, and stator tangential magnetic poles 108. In this case, the stator mount 101 can be fixed in the same way as a conventional motor. The stator core 102 is arranged within the stator mount 101, and is a part of the magnetic circuit of the motor. The stator tangential magnetic poles 108 are arranged on the stator core 102. The stator core magnetic poles 107 are arranged inside the stator core 102. In the middle of the stator core magnetic poles 107, the rotor core 104 is fixedly arranged on a rotor shaft. The rotor shaft can drive the rotor core 104 to rotate around a shaft axis, is fixedly arranged in the stator mount 101 via a bearing. A number of slots 105 are evenly formed on an outer circumference of the rotor core 104, and rotor armature windings are arranged in the slots 105. On one or both sides of the rotor core 104, a commutator or slip ring (not shown in the figure) is arranged on the rotor shaft, and the rotor armature windings are coupled to an external static power supply circuit through the commutator or slip ring and brushes (not shown in the figure).

In view of the difficulty that a magnetic field excited by a permanent magnet cannot be adjusted, a mechanical manner is adopted in the present disclosure to adjust the magnetic field. In the present embodiment, the stator tangential magnetic poles 108 are movably arranged on the stator core 102, and can move along an axial direction. In a normal operation state, the stator tangential magnetic poles 108 are aligned with the rotor core 104 in the axial direction. In the case that magnetic field adjustment is required, a mechanical mechanism is employed to move the stator tangential magnetic poles 108 axially so that the stator tangential magnetic poles 108 are no longer aligned with the rotor core 104 in the axial direction. As such, magnetic flux in the rotor core 104 will be reduced, that is, the effect of magnetic field weakening is achieved, which enables a function of speed governing or voltage regulation.

Preferably, the stator tangential magnetic poles 108 each can further be divided into segments in the axial direction, and axial movement thereof can move toward both ends of the axis of the motor, respectively, to reduce a length protruding out of each end and thus reduce a space required in the axis direction of the motor.

In a sixth embodiment of the present disclosure, a permanent magnet rotating armature motor which adjusts a magnetic field in a mechanical manner is provided. In the present embodiment, the stator tangential magnetic poles 108 are arranged, separately, to be divided into segments in an axial direction, or alternatively the stator core 102, the stator core magnetic poles 107 and the stator tangential magnetic poles 108 are together arranged to be divided into segments axially. The number of segments can be set as desire. Some segments of the stator tangential magnetic poles 108 or of an ensemble of the stator core 102, the stator core magnetic poles 107 and the stator tangential magnetic poles 108 can be rotated in the circumferential direction relative to other segments, so that the stator core magnetic poles 107 on respective segments are staggered from each other by a certain angle. As such, magnetic flux resulted from interlinked armature windings is reduced to decrease an induced electromotive potential so that the effect of speed governing or voltage regulation through magnetic field weakening is achieved.

In a seventh embodiment of the present disclosure, a permanent magnet rotating armature motor which adjusts a magnetic field in a mechanical manner is provided, as shown in Fig. 6. The stator core magnetic poles 107 are movably arranged within the stator core 102, and can move along the axial direction. In a normal operation state, the stator core magnetic poles 107 are aligned with the rotor core 104 in the axial direction. In the case that adjustment of the magnetic field is required, a mechanical mechanism is employed to move the stator core magnetic poles 107 axially so that the stator core magnetic poles 107 are no longer aligned with the rotor core 104 in the axial direction. As such, magnetic flux in the rotor core 104 will be reduced, that is, the effect of magnetic field weakening is achieved, which enables a function of speed governing or voltage regulation.

Preferably, the stator core magnetic poles 107 each can further be arranged to be divided into segments in the axial direction, and axial movement thereof can move toward both ends of the axis of the motor, respectively, to reduce a length protruding out of each end and thus reduce a space required in the axis direction of the motor.

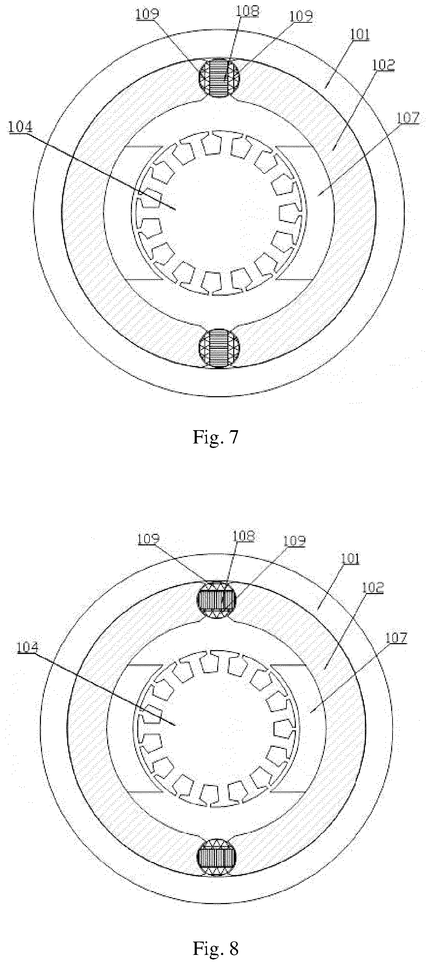

In an eighth embodiment of the present disclosure, a permanent magnet rotating armature motor which adjusts a magnetic field in a mechanical manner is provided, as shown in Figs. 7 and 8. Instead of being fixed on the stator core 102, the permanent magnet poles are rotatably arranged on the stator core 102. A stator tangential magnetic pole 108 and two sector cores 109 together form a cylinder, which can rotate around its axis. In Fig. 7, a direction of a magnetic field of the stator tangential magnetic pole 108 is consistent with a circumferential direction of the stator core 102, i.e., in a direction of the circumference. At this time, a magnetic field under the stator core magnetic poles 107 is the strongest. In Fig. 8, a direction of the magnetic field of the stator tangential magnetic pole 108 is perpendicular to the circumferential direction of the stator core 102, i.e., in a radial direction. At this time, magnetic flux of the stator tangential magnetic pole 108 is short-circuited, and the magnetic field under the stator core magnetic poles 107 is the weakest. By adjusting the stator tangential magnetic pole 108 to varied positions between the positions of Fig. 7 and Fig. 8, it is possible to adjust the magnetic flux of the magnetic circuit in a continuous manner, and thereby adjust the strength of the magnetic field.

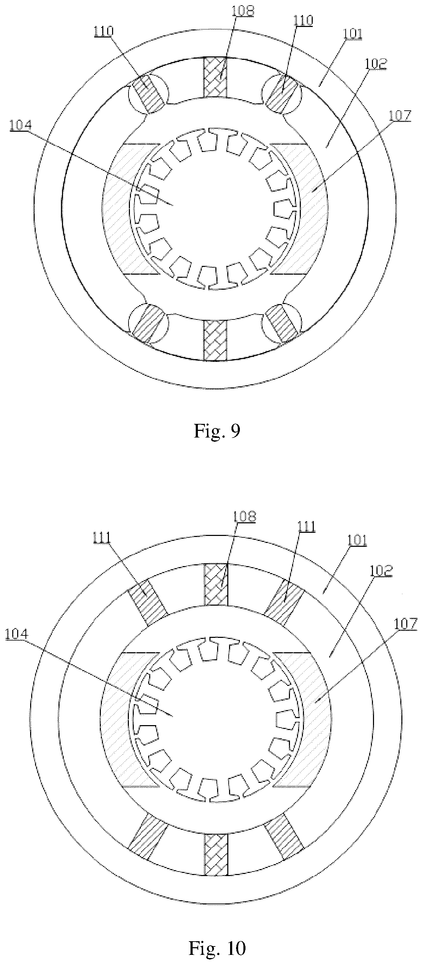

In a ninth embodiment of the present disclosure, a permanent magnet rotating armature motor which adjusts a magnetic field in a mechanical manner is provided, as shown in Fig. 9. In the present embodiment, a magnetic adjustment section is provided on the stator core 102, and the magnetic adjustment section is provided inside with a rotatable magnetic permeable section 110 which can rotate around a center of its own. When a length direction of the rotatable magnetic permeable section 110 is positioned to be consistent with the circumferential direction of the stator core 102, at this time, a permanent magnetic field, while passing through the rotatable magnetic permeable section 110, has low magnetic reluctance but strong magnetic field. In Fig. 9, the length direction of the rotatable magnetic permeable section 110 is positioned to be perpendicular to the stator core 102, i.e., in a radial direction. At this time, the permanent magnetic field hardly passes through the rotatable magnetic permeable section 110 along with high magnetic reluctance and weak magnetic field. By adjusting the rotatable magnetic permeable section 110 to varied positions between these two positions, it is possible to adjust the magnetic flux of the magnetic circuit in a continuous manner, and thereby adjust the strength of the magnetic field.

In a tenth embodiment of the present disclosure, a permanent magnet rotating armature motor which adjusts the magnetic field in a mechanical manner is provided, as shown in Fig. 10. In this embodiment, a pattern is adopted in which some small sections of the stator core 102 are configured to be as movable core sections 111 which are independently movable in the axial direction. The movable core sections 111 are disconnected with the stator core 102, and air gaps therebetween are as small as possible to reduce the magnetic reluctance. In the case that weakening of the magnetic field is required, the movable core sections 111 can be moved axially so that they are no longer aligned with the rotor core 104. Therefore, the magnetic flux in the rotor core 104 will be reduced, that is, the effect of magnetic field weakening is realized, which enables a function of speed governing or voltage regulation.

Preferably, the movable core sections 111 each can further be divided into segments in the axial direction, and axial movement thereof can move toward both ends of the axis of the motor, respectively, to reduce a length protruding out of each end and thus reduce a space required in the axis direction of the motor.

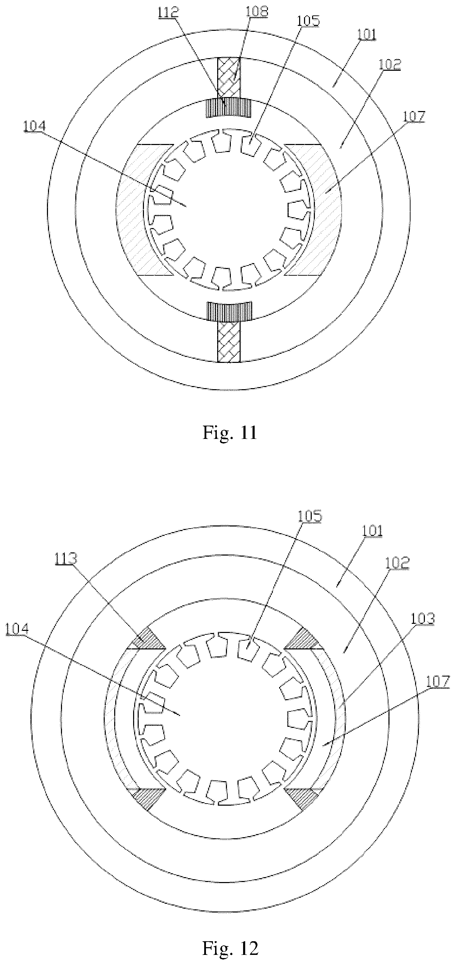

In an eleventh embodiment of the present disclosure, a permanent magnet rotating armature motor which adjusts a magnetic field in a mechanical manner is provided, as shown in Fig. 11. In the present embodiment, a pattern is adopted in which a magnetic flux short-circuiting movable core section 112 is provided beside the stator core 102 and the stator tangential magnetic pole 108, and the magnetic flux short-circuiting movable core section 112 can rotate in a circumferential direction by using a rotor axis as the center. At a position shown in Fig. 11, the magnetic flux short-circuiting movable core sections 112 short-circuit the stator tangential magnetic poles 108, respectively, and a magnetic field under the stator core magnetic poles 107 is the weakest. If the magnetic flux short-circuiting movable core sections 112 each rotate by an angle so as to not coincide with the stator tangential magnetic poles 108, then the magnetic field under the stator core magnetic poles 107 increases. As long as the magnetic flux short-circuiting movable core section 112 rotates by different angles, the magnetic field can be adjusted. The magnetic flux short-circuiting movable core sections 112 can also be arranged outside the stator core 102.

As another embodiment, as shown in Fig. 11, a pattern is adopted in this embodiment, in which a magnetic flux short-circuiting movable core section 112 is arranged beside the stator core 102 and the stator tangential magnetic pole 108, and the magnetic flux short-circuiting movable core section 112 can move in an axial direction. In the case that weakening of magnetic field is required, the magnetic flux short-circuiting movable core sections 112 are moved axially to align with the rotor core 104 so as to short-circuit the permanent magnetic flux. In the case that weakening of magnetic field is not necessary, the magnetic flux short-circuiting movable core sections 112 are moved in the axial direction to a position that is not aligned with the rotor core 104. The magnetic flux short-circuiting movable core sections 112 each can further be divided into segments, and axial movement thereof can move toward both ends of the axis of the motor, respectively, to reduce a length protruding out of each end and thus reduce a space required in the axis direction of the motor.

In a twelfth embodiment of the present disclosure, a permanent magnet rotating armature motor which adjusts a magnetic field in a mechanical manner is provided, as shown in Fig. 12. In this embodiment, stator permanent magnet poles 103 are fixedly arranged within the stator core 102 in a surface mount manner. The stator core magnetic poles 107 are fixedly arranged on surface of the stator permanent magnetic poles 103, respectively. A bypass yoke 113 is arranged beside the stator permanent magnetic pole 103 and the stator core magnetic pole 107, and the bypass yoke 113 can move in the axial direction. In the case that weakening of magnetic field is required, the bypass yokes 113 are moved axially to be aligned with both the stator permanent magnet poles 103 and the stator core magnetic poles 107 so as to short-circuit the permanent magnet flux. In the case that weakening of magnetic field is not necessary, the bypass yokes 113 are moved in the axial direction to a position that is aligned with neither the stator permanent magnet poles 103 nor the stator core magnetic poles 107. The bypass yokes 113 each can further be divided into segments, and axial movement thereof can move toward both ends of the axis of the motor, respectively, to reduce a length protruding out of each end and thus reduce a space required in the axis direction of the motor. Here, a shape of the bypass yoke 113 is not limited as long as it can function as a magnetic circuit. For example, a shape as shown in Fig. 12 can be used, or other shapes likes an arc shape can be used as well. In addition, the bypass yokes 113 can also be configured to be movable in a circumferential direction so as to be away from the stator core magnetic poles 107 to change the magnetic reluctance of the magnetic circuit.

In addition, the rotatable magnetic permeable section 107 shown in Figs. 4 and 5 can also be arranged on the bypass yoke 113 to achieve magnetic field adjustment.

In summary, the method for mechanically adjusting the magnetic field according to the present disclosure can be applied to surface-mounted permanent magnet motors, tangential permanent magnet motors, and interior permanent magnet motors so as to be used in magnetic circuit, such as magnetic yokes and magnetic poles.

The present disclosure is illustrated in most part by taking the DC motor as an example. In fact, the present disclosure relates to a permanent magnet rotating armature motor, including both the DC motor and the rotating armature AC motor. In addition, the present disclosure can also be applied on a motor with a permanent magnet arranged on the stator.

The present disclosure can also be applied on a permanent magnet motor with rotating magnetic poles. However, as the rotor itself rotates, it is more complicated and difficult to arrange the mechanical mechanism for magnetic field adjustment, but nevertheless it is still applicable.

The above embodiments are only used to illustrate the present disclosure. The structure, size, location and shape of each component can be changed. On the basis of the technical solutions of the present disclosure, any improvements and equivalent transformations made to individual components based on the principles of the present disclosure should not be excluded from the protection scope of the present disclosure.

## Claims

1. A permanent magnet rotating armature motor adjusting a magnetic field in a mechanical manner, comprising: a stator mount, a stator core, stator permanent magnet poles, a rotor core, and rotor slots; the stator core is arranged within the stator mount and is a part of magnetic circuit of the motor, and the stator permanent magnet poles are arranged within the stator core; in middle of the stator permanent magnet poles, the rotor core is fixedly arranged on a rotor shaft, and the rotor shaft drives the rotor core to rotate around a shaft axis and is fixedly arranged inside the stator mount through a bearing; a number of rotor slots are evenly formed on an outer circumference of the rotor core, and rotor armature windings are arranged in the rotor slots; on one or both sides of the rotor core, a commutator or slip ring is provided on the rotor shaft, and the rotor armature windings are coupled to an external static power supply circuit through the commutator or slip ring and brushes; and a mechanical manner is used for magnetic field adjustment.

2. The permanent magnet rotating armature motor according to claim 1, wherein the stator permanent magnet poles are movably arranged inside the stator core, and the stator permanent magnet poles are movable along an axial direction.

3. The permanent magnet rotating armature motor according to claim 2, wherein the stator permanent magnet poles are each divided into segments in the axial direction to move toward both ends of an axis of the motor, respectively, so as to reduce a length protruding out of each end and thus reduce a space required in the axial direction of the motor.

4. The permanent magnet rotating armature motor according to claim 1, wherein the stator permanent magnet poles are arranged, separately, to be divided into segments in an axial direction, and the stator permanent magnet poles are movably arranged within the stator core; alternatively, the stator core together with the stator permanent magnet poles are divided into segments in the axial direction, and the stator permanent magnet poles are fixedly arranged inside the stator core; some segments of the stator permanent magnet poles or of an ensemble of the stator core and the stator permanent magnet poles rotate in a circumferential direction relative to other segments, so that the stator permanent magnet poles on respective segments are staggered from each other.

5. The permanent magnet rotating armature motor of claim 1, wherein a small section of the stator core is configured to be as a movable core section that is independently movable in an axial direction, the movable core section is disconnected with the stator core, and an air gap therebetween is small; and the movable core section moves in the axial direction.

6. The permanent magnet rotating armature motor according to claim 5, wherein the movable core section adopts a segmented form to move toward both ends of the axial direction of the motor, respectively, so as to reduce a length protruding out of each end.

7. The permanent magnet rotating armature motor according to claim 1, the stator core is provided with a magnetic adjustment section thereon, the magnetic adjustment section is provided inside with a rotatable magnetic permeable section which can rotate around a center of its own; by adjusting a position of a length direction of the rotatable magnetic permeable section relative to a magnetic field direction in the stator core, magnetic reluctance of magnetic circuit is able to be adjusted in a continuous manner so as to adjust a strength of the magnetic field.

8. A permanent magnet rotating armature motor adjusting a magnetic field in a mechanical manner, comprising: a stator mount, a stator core, stator core magnetic poles, a rotor core, rotor slots, and stator tangential magnetic poles; the stator core is arranged within the stator mount and is a part of magnetic circuit of the motor, the stator tangential magnetic poles are arranged on the stator core, and the stator core magnetic poles are arranged inside the stator core; in middle of the stator core magnetic poles, the rotor core is fixedly arranged on a rotor shaft, the rotor shaft drives the rotor core to rotate around a shaft axis and is fixedly arranged in the stator mount via a bearing; a number of slots are evenly formed on an outer circumference of the rotor core, and rotor armature windings are arranged in the slots; on one or both sides of the rotor core, a commutator or slip ring is arranged on the rotor shaft, and the rotor armature windings are coupled to an external static power supply circuit through the commutator or slip ring and brushes.

9. The permanent magnet rotating armature motor according to claim 8, wherein the stator tangential magnetic poles are movably arranged on the stator core, and the stator tangential magnetic poles are movable along an axial direction.

10. The permanent magnet rotating armature motor according to claim 9, wherein the stator tangential magnetic poles are each divided into segments in the axial direction to move toward both ends of an axis of the motor, respectively, so as to reduce a length protruding out of each end.

11. The permanent magnet rotating armature motor according to claim 8, wherein the stator tangential magnetic poles are arranged, separately, to be divided into segments in an axial direction, or alternatively the stator core, the stator core magnetic poles and the stator tangential magnetic poles are together arranged to be divided into segments in the axial direction; some segments of the stator tangential magnetic poles or of an ensemble of the stator core, the stator core magnetic poles and the stator tangential magnetic poles are rotatable in a circumferential direction relative to other segments, so that the stator core magnetic poles on respective segments are staggered from each other.

12. The permanent magnet rotating armature motor of claim 8, wherein the stator core magnetic poles are movably arranged within the stator core, and the stator core magnetic poles are movable along an axial direction.

13. The permanent magnet rotating armature motor of claim 12, wherein the stator core magnetic poles are each arranged to be divided into segments in the axial direction to move toward both ends of an axis of the motor, respectively, so as to reduce a length protruding out of each end.

14. The permanent magnet rotating armature motor of claim 8, wherein a stator tangential magnetic pole and two sector cores together form a cylinder which is rotatable around its axis; by adjusting a position relationship between a magnetic field direction of the stator tangential magnetic pole and a circumferential direction of the stator core, magnetic reluctance of magnetic circuit is able to be adjusted in a continuous manner so as to adjust a strength of the magnetic field.

15. The permanent magnet rotating armature motor according to claim 8, wherein the stator core is provided with a magnetic adjustment section thereon, and the magnetic adjustment section is provided inside with a rotatable magnetic permeable section which is rotatable around a center of its own; by adjusting a position relationship between a length direction of the rotatable magnetic permeable section and the stator core, magnetic reluctance of magnetic circuit is able to be adjusted in a continuous manner so as to adjust a strength of the magnetic field.

16. The permanent magnet rotating armature motor according to claim 8, wherein some small sections of the stator core are configured to be as movable core sections which are independently movable in the axial direction, the movable core sections are disconnected with the stator core, and air gaps therebetween are small; and the movable core sections are movable in an axial direction.

17. The permanent magnet rotating armature motor according to claim 16, wherein the movable core sections are each arranged to be divided into segments in the axial direction to move toward both ends of the axis of the motor, respectively, so as to reduce a length protruding out of each end.

18. The permanent magnet rotating armature motor according to claim 8, wherein a magnetic flux short-circuiting movable core section is provided beside the stator core and the stator tangential magnetic pole, and the magnetic flux short-circuiting movable core section is rotatable in a circumferential direction by using a rotor axis as a center, or is movable in an axial direction; when rotating, the magnetic flux short-circuiting movable core section rotates by different angles to adjust the magnetic field; when moving in the axial direction, the magnetic flux short-circuiting movable core section moves in the axial direction to a position that is not aligned with the rotor core.

19. The permanent magnet rotating armature motor according to claim 8, wherein the stator permanent magnet poles are fixedly arranged within the stator core in a surface mount manner, the stator core magnetic poles are fixedly arranged on inner surface of the stator permanent magnetic poles, respectively, a bypass yoke is arranged beside the stator permanent magnetic pole and the stator core magnetic pole, and the bypass yoke is movable in an axial direction or in a circumferential direction.
